# FASCICULE DE BREVET EUROPEEN

(11) **EP 3 426 906 B1**
(45) Date de publication et mention de la délivrance du brevet: **22.04.2020**
(21) Numéro de dépôt: 17713733.8
(22) Date de dépôt: 07.03.2017
(51) Int. Cl.: F02K 9/95, F02K 9/97

(54) **MOTEUR-FUSÉE ALLUMÉ PAR LE SOL**
RAKETENANTRIEB MIT BODENZÜNDUNG
ROCKET ENGINE WITH GROUND IGNITION

(30) Priorité: 07.03.2016 FR 1600377
(43) Date de publication de la demande: 16.01.2019
(73) Titulaire: ARIANEGROUP SAS, 75015 Paris (FR)
(72) Inventeur: PYRE, Alain, 27950 Saint-Just (FR); MERLIN, Cindy, 27600 Saint Aubin Sur Gaillon (FR)
(74) Mandataire: Cabinet Beau de Loménie
(86) Numéro de dépôt international: PCT/FR2017/050506
(87) Numéro de publication internationale: WO 2017/153677

(56) Documents cités:
- EP-A1- 1 541 850
- FR-A- 1 114 309
- FR-A- 1 289 601
- FR-E- 61 977
- US-A- 2 706 887

## Description

### DOMAINE DE L'INVENTION

Le présent exposé concerne un moteur-fusée bénéficiant d'un allumage par le sol plus sûr et mieux maitrisé.

Un tel moteur-fusée peut notamment équiper le premier étage ou l'étage unique d'un lanceur commercial, d'un missile ou de tout autre type de fusée ou véhicule à usage civil ou militaire.

### ETAT DE LA TECHNIQUE ANTERIEURE

Les moteurs principaux à ergols liquides des premiers étages de lanceurs étant mis à feu lorsque le lanceur est encore au sol, il est possible de les allumer à l'aide de torches prévues sur le pas de tir, ce qui permet de se passer d'un dispositif d'allumage interne et offre donc un gain substantiel de masse embarqué et de coût.

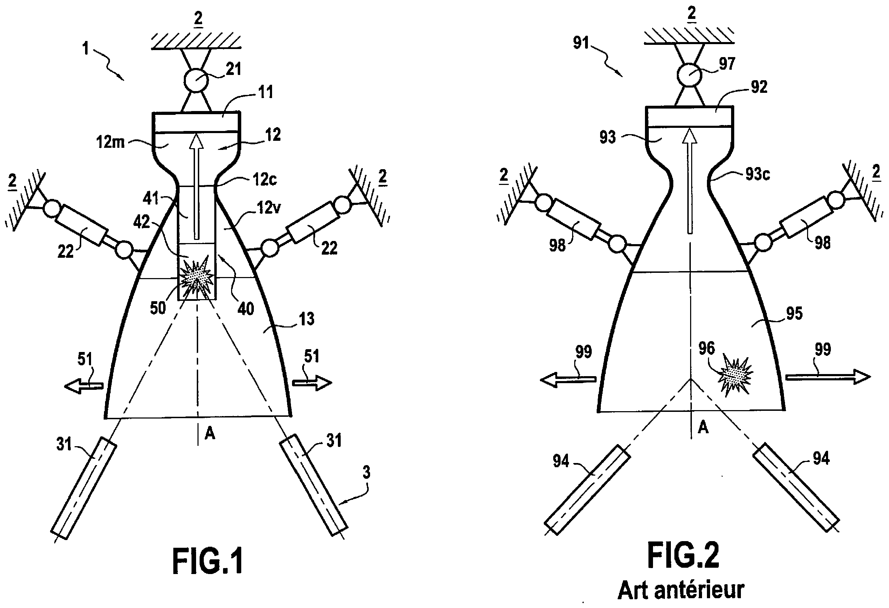

Ainsi, comme cela est représenté sur la FIG 2, lors d'un allumage conventionnel par le sol, la tête d'injection 92 du moteur-fusée 91 injecte les ergols liquides dans la chambre propulsive 93 : les ergols s'écoulent alors dans la chambre propulsive 93 puis tombent vers le sol à la manière d'une douche sensiblement conique à partir du col 93c de la chambre propulsive 93. Des torches d'allumage 94, montées sur le pas de tir, projettent alors une flamme en direction de l'axe de symétrie A du moteur-fusée 91, dans une zone relativement proche de l'extrémité aval du divergent 95 du moteur-fusée 91, de sorte à embraser les ergols et donc à réaliser l'allumage du moteur 91.

Toutefois, la détonation qui survient au moment de l'allumage provoque des charges axiales et latérales importantes pouvant endommager notamment la chambre propulsive 93, le divergent 95, l'articulation 97, ou encore les vérins 98 du moteur 91, voire le lanceur situé au-dessus de l'articulation 97. Ces organes doivent dès lors être dimensionnés en conséquence.

En outre, en raison de l'écoulement conique des ergols en aval du col 93c, la zone effective d'allumage 96 peut se trouver sensiblement décalée par rapport à l'axe de symétrie A du moteur 91.

Dès lors, un tel décalage provoque des charges latérales 99 dissymétriques lors de la détonation et entraîne donc des moments de flexion importants s'appliquant sur le moteur-fusée. Naturellement, plus la zone d'allumage est excentrée, plus ces charges latérales et ces moments de flexions sont importants.

A ce jour, une option pour lutter contre ces effets est d'utiliser des torches d'allumage longues et intrusives permettant d'allumer les ergols plus en amont dans le moteur-fusée et dans une zone plus proche de l'axe de symétrie du moteur.

Toutefois, ces torches intrusives, qui sont dès lors soumises aux température et pression élevées du moteur en fonctionnement, sont coûteuses et nécessitent une maintenance importante entre chaque lancement.

On connait également le document FR 61 977 qui décrit un procédé d'allumage dans lequel un liquide d'allumage est mis en place initialement dans la chambre propulsive.

Il existe donc un réel besoin pour un moteur-fusée bénéficiant d'un allumage par le sol plus sûr et mieux maîtrisé et qui soient dépourvus, au moins en partie, des inconvénients inhérents aux méthodes connues précitées.

### PRESENTATION DE L'INVENTION

Le présent exposé concerne un moteur-fusée, comprenant une chambre propulsive, axisymétrique, comportant un col au niveau duquel le diamètre de la chambre propulsive est minimal, une tête d'injection configurée pour injecter au moins un ergol liquide dans la chambre propulsive, et un guide tubulaire, destructible, rapporté coaxialement dans la chambre propulsive de manière à canaliser ledit ergol en aval du col de la chambre propulsive. Selon l'invention, au moins une partie du guide est configurée pour résister au moins 2 secondes à une température de 1700 °C. De cette manière, le guide résiste et reste en place le temps de l'allumage du moteur à l'aide des torches d'allumage, un tel allumage nécessitant en général une à deux secondes.

Dans le présent exposé, on entend par « destructible », un élément qui peut être détruit ou au moins éjecté par le moteur-fusée au cours du fonctionnement normal de ce dernier, lorsque son allumage a été réalisé et que son régime permanent s'est établi. De plus, dans le présent exposé, les termes « axial », « radial », « tangentiel », « intérieur », « extérieur » et leurs dérivés sont définis par rapport à l'axe principal du moteur-fusée ; on entend par « plan axial » un plan passant par l'axe principal du moteur-fusée et par « plan radial » un plan perpendiculaire à cet axe principal ; enfin, les termes « amont » et « aval » sont définis par rapport à la circulation de fluides dans le moteur-fusée.

Grâce à un tel guide, dont le coût est très faible, les ergols sont canalisés dans le volume intérieur du guide autour de l'axe de symétrie de la chambre propulsive et ne se dispersent plus dans la chambre propulsive à la sortie du col. Il est alors possible de pointer les torches d'allumage du pas de tir vers la partie inférieure du guide afin de réaliser l'allumage plus haut dans le moteur-fusée et plus proche de son axe de symétrie. Dès lors, les charges latérales provoquées par la détonation sont plus faibles et moins dissymétriques : les contraintes subies par les composants du moteur-fusée sont donc plus faibles. Ces composants peuvent alors être allégés, réduisant ainsi la masse totale du moteur-fusée.

En outre, le guide circonscrit la zone d'allumage et peut contribuer à absorber une part de l'énergie de la détonation lors de l'allumage, ce qui contribue à réduire les charges subies par la chambre propulsive.

De plus, le guide est configuré pour être détruit et éjecté par la détonation ou, au plus tard, par la chaleur et la vitesse de l'écoulement des gaz brulés lorsque le moteur commence à fonctionner : dès lors, il n'affecte pas les performances du moteur-fusée et ne l'alourdit pas.

Dans certains modes de réalisation, le diamètre de la chambre propulsive diminue depuis son extrémité amont, qui est connectée à la tête d'injection, vers son col puis croit à nouveau depuis son col jusqu'à son extrémité aval.

Dans certains modes de réalisation, le guide est axisymétrique. On favorise ainsi un allumage à proximité de l'axe de symétrie du moteur-fusée.

Dans certains modes de réalisation, le guide est cylindrique, de préférence à base circulaire. On favorise ainsi un écoulement parallèle à l'axe de symétrie en réduisant la dispersion latérale de l'ergol, ce qui favorise un allumage à proximité de l'axe de symétrie du moteur-fusée.

Dans d'autres modes de réalisation, le guide est conique, de préférence convergent vers l'aval.

Dans certains modes de réalisation, le guide s'étend à partir du col de la chambre propulsive. L'ergol s'écoule ainsi continument depuis la partie amont de la chambre propulsive vers le guide.

Dans certains modes de réalisation, le guide est fixé de manière étanche au niveau du col de la chambre propulsive. Il peut notamment être fixé à l'aide de ruban adhésif ou de tout autre moyen de fixation destructible.

Dans certains modes de réalisation, le guide s'étend au moins jusqu'à l'extrémité aval de la chambre propulsive.

Dans certains modes de réalisation, le moteur-fusée comprend en outre un divergent connecté à l'extrémité aval de la chambre propulsive.

Dans certains modes de réalisation, le guide s'étend dans le divergent au plus sur 20% de la longueur du divergent, de préférence au plus sur 10% de la longueur du divergent, voire sur 0% de la longueur du divergent. De cette manière, il est possible de réaliser l'allumage assez haut dans le moteur-fusée de sorte à réduire le risque d'un allumage dissymétrique.

Dans certains modes de réalisation, le guide est léger. Le guide pèse ainsi de préférence moins de 5 kg.

Dans certains modes de réalisation, le guide est souple. Il peut ainsi, par exemple, être réalisé en tissu ou en matériau plastique.

Dans certains modes de réalisation, le guide possède une épaisseur inférieure à 10 mm, de préférence comprise entre 2 et 10 mm.

Dans certains modes de réalisation, au moins une partie du guide, de préférence sa partie amont, éventuellement l'intégralité du guide, est configurée pour se déchirer lorsqu'une pression supérieure à 5 bar s'exerce sur sa face intérieure. De cette manière, le guide se déchire au moment de la détonation, ce qui contribue à sa destruction et à son évacuation.

Dans certains modes de réalisation, au moins cette partie du guide, éventuellement l'intégralité du guide, est réalisée en plastique. Toutefois, d'autres matériaux sont naturellement possible.

Dans certains modes de réalisation, au moins cette partie du guide, éventuellement l'intégralité du guide, est réalisée dans un matériau isolant thermique. Il peut ainsi comprendre un tissu en fibres de silice, du liège, un revêtement Nextel (marque déposée) ou un matériau multicouche MLI Jehier (marque déposée), pour ne citer que ces exemples.

Dans certains modes de réalisation, au moins cette partie du guide, éventuellement l'intégralité du guide, est munie d'un revêtement intérieur de protection thermique.

Dans certains modes de réalisation, la chambre propulsive est dépourvue de dispositif d'allumage interne.

Le présent exposé concerne également un ensemble comprenant un moteur-fusée selon l'un quelconque des modes de réalisation précédents et une table de lancement, le moteur-fusée étant positionné sur la table de lancement.

Dans certains modes de réalisation, la table de lancement comprend au moins une torche d'allumage configurée pour projeter une flamme vers l'espace intérieur du guide du moteur-fusée.

Dans certains modes de réalisation, ladite torche d'allumage, de préférence chaque troche d'allumage, pointe vers une zone située le long de l'axe du moteur-fusée et située pas plus bas qu'un niveau s'étendant à 20% de la longueur du divergent du moteur-fusée depuis l'extrémité amont du divergent. De préférence, la torche d'allumage pointe vers une zone située en amont de l'interface entre la chambre propulsive et le divergent. Ceci permet de réduire le risque d'un allumage dissymétrique.

Dans certains modes de réalisation, ladite torche d'allumage, de préférence chaque torche d'allumage, ne pénètre pas à l'intérieur du moteur-fusée. De cette manière, le cout et la maintenance de la torche d'allumage est réduit.

Les caractéristiques et avantages précités, ainsi que d'autres, apparaîtront à la lecture de la description détaillée qui suit, d'exemples de réalisation du moteur-fusée proposé. Cette description détaillée fait référence aux dessins annexés.

### BREVE DESCRIPTION DES DESSINS

Les dessins annexés sont schématiques et visent avant tout à illustrer les principes de l'invention.
La FIG 1 est un plan en coupe d'un moteur-fusée selon l'invention.
La FIG 2 est un plan en coupe d'un moteur-fusée de l'art antérieur.

### DESCRIPTION DETAILLEE D'EXEMPLE(S) DE REALISATION

Afin de rendre plus concrète l'invention, un exemple de moteur-fusée est décrit en détail ci-après, en référence aux dessins annexés. Il est rappelé que l'invention ne se limite pas à cet exemple.

La FIG 1 représente, en coupe selon un plan vertical passant par son axe principal A, un moteur-fusée 1 selon l'invention. Il comporte, d'amont en aval, une tête d'injection 11, une chambre propulsive 12 et un divergent. Cet ensemble est monté sur un lanceur 2 par l'intermédiaire d'une articulation 21 du type Cardan, montée à son extrémité supérieure, et de vérins latéraux 22.

La chambre propulsive 12, symétrique autour de l'axe A du moteur 1, est connectée par son extrémité amont à la tête d'injection 11. Le diamètre de la chambre propulsive diminue alors vers l'aval jusqu'à atteindre un minimum, formant un col 12c, avant de croître à nouveau jusqu'à l'extrémité aval de la chambre propulsive. Cette extrémité aval est connectée au divergent 13 du moteur 1.

Lors du fonctionnement normal du moteur 1, en régime permanent, la tête d'injection 1 injecte un mélange de deux ergols liquides dans la partie amont 12m de la chambre propulsive 12 ; la combustion des ergols se produit alors dans cette partie 12m de la chambre propulsive 12, formant chambre de combustion, et génère une quantité importante de gaz brulé éjectés à grande vitesse vers l'aval ; le passage du col 12c de la chambre propulsive 12 permet d'accélérer les gaz brûlés tandis que sa partie aval 12v et le divergent 13 assurent la détente des gaz brûlés avant leur éjection à l'extrémité aval du divergent 13, assurant ainsi une poussée contraire dirigée vers le haut et permettant de propulser le lanceur.

Lors de la préparation du lancement, le lanceur 2 est placé la table de lancement 3 d'un pas de tir, cette table de lancement 3 étant équipée de torches d'allumage 31 qui ne pénètrent pas dans le moteur-fusée 1.

En outre, un guide tubulaire 40, en l'espèce cylindrique à base circulaire dont le diamètre est sensiblement égal à celui du col 12c de la chambre propulsive 12, est monté dans le moteur-fusée 1 coaxialement à l'axe principal A. Ce guide tubulaire 40 possède deux parties connectées l'une à l'autre de manière étanche : une partie amont 41, réalisée en plastique, et une partie aval 42, réalisée dans un matériau isolant thermique comprenant des fibres de silice.

L'extrémité amont du guide tubulaire 40 est fixée sur le col 12c de la chambre de propulsive 12, par exemple à l'aide de ruban adhésif. Il s'étend ainsi dans la partie aval 12v de la chambre propulsive 12 depuis le col 12c et pénètre en partie dans le divergent 13. Dans cet exemple, l'extrémité aval du guide tubulaire 40 se situe à un niveau situé à environ 15% de la longueur du divergent 13 à partir de l'extrémité amont du divergent 13.

Les torches d'allumage 31 sont alors orientées de manière à pointer vers la partie aval 42 du guide tubulaire 40.

Pour allumer le moteur 1, on injecte les deux ergols liquides à l'aide de la tête d'injection 11; ces derniers s'écoulent alors dans la partie amont 12m de la chambre propulsive 12 puis dans le guide tubulaire 40 sans se disperser latéralement. Les torches d'allumage 31 sont alors allumées et projettent chacune une flamme en direction du volume intérieur de la partie aval 42 du guide tubulaire 40, c'est-à-dire en direction de l'axe principal A du moteur 1 et au niveau de l'interface 15 entre la chambre propulsive 12 et le divergent 13. Cette étape peut durer une à deux secondes avant que les ergols ne s'embrasent : le matériau isolant thermique de la partie aval 42 du guide tubulaire 40 permet alors à ce dernier de résister jusqu'à l'allumage effectif du moteur.

Ainsi, grâce au guide tubulaire 40, l'allumage des ergols se produit dans une zone d'allumage 50 maîtrisée et située à l'intérieur du guide tubulaire 40, assez précisément sur l'axe de symétrie A du moteur-fusée 1, ce qui provoque des charges latérales 51 symétriques et donc relativement faibles.

Lors de la détonation, le guide tubulaire 40 se déchire et est éjecté par le souffle de la détonation hors du moteur-fusée 1. Une fois l'allumage réalisé, la chaleur et la vitesse des gaz brulés permettent de détruire et/ou d'éjecter les éventuels résidus du guide tubulaire 40 et de ses moyens de fixation.

Les modes ou exemples de réalisation décrits dans le présent exposé sont donnés à titre illustratif et non limitatif.

L'étendue de la protection est déterminée uniquement par les revendications suivantes.

## Revendications

1. Moteur-fusée, comprenant
une chambre propulsive (12), axisymétrique, comportant un col (12c) au niveau duquel le diamètre de la chambre propulsive (12) est minimal,
une tête d'injection (11) configurée pour injecter au moins un ergol liquide dans la chambre propulsive (12), et
un guide tubulaire (40), destructible, rapporté coaxialement dans la chambre propulsive (12) de manière à canaliser ledit ergol en aval du col (12c) de la chambre propulsive (12),
**caractérisé en ce qu'**au moins une partie du guide (40) est configurée pour résister au moins 2 secondes à une température de 1700 °C.

2. Moteur-fusée selon la revendication 1, dans lequel le guide (40) est axisymétrique, de préférence cylindrique à base circulaire.

3. Moteur-fusée selon la revendication 1 ou 2, dans lequel le guide (40) est fixée de manière étanche au niveau du col (12c) de la chambre propulsive (12).

4. Moteur-fusée selon l'une quelconque des revendications 1 à 3, comprenant un divergent (13) connecté à l'extrémité aval de la chambre propulsive (12),
dans lequel le guide (40) s'étend dans le divergent (13) au plus sur 20% de la longueur du divergent (13), de préférence au plus sur 10% de la longueur du divergent (13).

5. Moteur-fusée selon l'une quelconque des revendications 1 à 4, dans lequel le guide (40) est configuré pour se déchirer lorsqu'une pression supérieure à 5 bar s'exerce sur sa face intérieure.

6. Moteur-fusée selon l'une quelconque des revendications 1 à 5, dans lequel le guide (40) s'étend à partir du col (12c) de la chambre propulsive (12).

7. Moteur-fusée selon l'une quelconque des revendications 1 à 6, dans lequel la chambre propulsive (12) est dépourvue de dispositif d'allumage interne.

8. Ensemble comprenant un moteur-fusée (1) selon l'une quelconque des revendications 1 à 7 et une table de lancement (3), le moteur-fusée (1) étant positionné sur la table de lancement (3),
dans lequel la table de lancement (3) comprend au moins une torche d'allumage (31) configurée pour projeter une flamme vers l'espace intérieur du guide (40) du moteur-fusée (1).

9. Ensemble selon la revendication 8, dans lequel le moteur-fusée (1) comprend un divergent (13) connecté à l'extrémité aval de la chambre propulsive (12), et
dans lequel ladite torche d'allumage (31) pointe vers une zone située le long de l'axe (A) du moteur-fusée (1) et située pas plus bas qu'un niveau s'étendant à 20% de la longueur du divergent (13) du moteur-fusée (1) depuis l'extrémité amont du divergent (13).

10. Ensemble selon la revendication 8 ou 9, dans lequel ladite torche d'allumage (31) ne pénètre pas à l'intérieur du moteur-fusée (1).

## Patentansprüche

1. Raketenmotor, umfassend
eine achsensymmetrische Vortriebskammer (12), die einen Hals (12c) beinhaltet, auf dessen Höhe der Durchmesser der Vortriebskammer (12) minimal ist,
einen Einspritzkopf (11), der dazu ausgestaltet ist, zumindest einen flüssigen Treibstoff in die Vortriebskammer (12) einzuspritzen, und
eine zerstörbare rohrförmige Führung (40), die koaxial auf eine Weise in die Vortriebskammer (12) eingebracht ist, dass sie den Treibstoff stromabwärts des Halses (12c) der Vortriebskammer (12) kanalisiert,
**dadurch gekennzeichnet, dass** zumindest ein Führungsabschnitt (40) dazu ausgestaltet ist, zumindest 2 Sekunden bei einer Temperatur von 1700 °C standzuhalten.

2. Raketenmotor nach Anspruch 1, wobei die Führung (40) achsensymmetrisch, vorzugsweise zylindrisch mit kreisförmiger Basis ist.

3. Raketenmotor nach Anspruch 1 oder 2, wobei die Führung (40) auf abdichtende Weise auf Höhe des Halses (12c) der Vortriebskammer (12) fixiert ist.

4. Raketenmotor nach einem der Ansprüche 1 bis 3, umfassend eine Umlenkung (13), die mit dem stromabwärtigen Ende der Vortriebskammer (12) verbunden ist,
wobei die Führung (40) sich in der Umlenkung (13) höchstens über 20 % der Länge der Umlenkung (13), vorzugsweise höchstens über 10 % der Länge der Umlenkung (13) erstreckt.

5. Raketenmotor nach einem der Ansprüche 1 bis 4, wobei die Führung (40) dazu ausgestaltet ist, sich abzulösen, wenn ein Druck von mehr als 5 bar auf ihre Innenseite wirkt.

6. Raketenmotor nach einem der Ansprüche 1 bis 5, wobei die Führung (40) sich ausgehend von dem Hals (12c) der Vortriebskammer (12) erstreckt.

7. Raketenmotor nach einem der Ansprüche 1 bis 6, wobei die Vortriebskammer (12) keine interne Zündvorrichtung aufweist.

8. Anordnung, die einen Raketenmotor (1) nach einem der Ansprüche 1 bis 7 und eine Startrampe (3) umfasst, wobei der Raketenmotor (1) auf der Startrampe (3) positioniert ist,
wobei die Startrampe (3) zumindest einen Zündbrenner (31) umfasst, der dazu ausgestaltet ist, eine Flamme in den Innenraum der Führung (40) des Raketenmotors (1) zu werfen.

9. Anordnung nach Anspruch 8, wobei der Raketenmotor (1) eine Umlenkung (13) umfasst, die mit dem stromabwärtigen Ende der Vortriebskammer (12) verbunden ist, und
wobei der Zündbrenner (31) zu einer Zone hin weist, die sich entlang der Achse (A) des Raketenmotors (1) befindet und sich nicht tiefer als eine Höhe befindet, die sich bei 20 % der Länge der Umlenkung (13) des Raketenmotors (1) von dem stromaufwärtigen Ende der Umlenkung (13) erstreckt.

10. Anordnung nach Anspruch 8 oder 9, wobei der Zündbrenner (31) nicht in das Innere des Raketenmotors (1) eindringt.

## Claims

1. A rocket engine, comprising
an axisymmetric propulsion chamber (12), including a throat (12c) at which the diameter of the propulsion chamber (12) is a minimum,
an injection head (11) configured to inject at least one liquid propellant into the propulsion chamber (12), and
a destructible tubular guide (40), applied coaxially in the propulsion chamber (12) so as to channel said propellant downstream of the throat (12c) of the propulsion chamber (12), **characterized in that** at least one portion of the guide (40) is configured to resist at least 2 seconds at a temperature of 1700 °C.

2. The rocket engine according to claim 1, wherein the guide (40) is axisymmetric, preferably cylindrical with a circular base.

3. The rocket engine according to claim 1 or 2, wherein the guide (40) is attached in a sealed fashion to the throat (12c) of the propulsion chamber (12).

4. The rocket engine according to any one of claims 1 to 3, comprising a divergent nozzle (13) connected to the downstream end of the propulsion chamber (12),
wherein the guide (40) extends into the divergent nozzle (13) over at most 20% of the length of the divergent nozzle (13), preferably over at most 10% of the length of the divergent nozzle (13).

5. The rocket engine according to any one of claims 1 to 4, wherein the guide (40) is configured to tear when a pressure greater than 5 bar is exerted on its interior face.

6. The rocket motor according to any one of claims 1 to 5, wherein the guide (40) extends from the throat (12c) of the propulsion chamber (12).

7. The rocket motor according to any one of claims 1 to 6, wherein the propulsion chamber (12) is devoid of an internal ignition device.

8. An assembly comprising a rocket engine (1) according to any one of claims 1 to 7 and a launch pad (3), the rocket engine (1) being positioned on the launch pad (3),
wherein the launch pad (3) comprises at least one ignition torch (31) configured to project a flame toward the interior space of the guide (40) of the rocket engine (1).

9. The assembly according to claim 8, wherein the rocket engine (1) comprises a divergent nozzle (13) connected to the downstream end of the propulsion chamber (12), and
wherein said ignition torch (31) points toward a zone situated along the axis (A) of the rocket engine (1) and not situated lower than 20% of the length of the divergent nozzle (13) of the rocket engine (1) starting from the upstream end of the divergent nozzle (13).

10. The assembly according to claim 8 or 9, wherein said ignition torch (31) does not penetrate into the interior of the rocket engine (1).
